Europäisches Patentamt

European Patent Office

Office européen des brevets

(19)

(11) Veröffentlichungsnummer: **0 026 875**
**B1**

(12) **EUROPÄISCHE PATENTSCHRIFT**

(45) Veröffentlichungstag der Patentschrift: **10.09.86**

(21) Anmeldenummer: **80105720.9**

(22) Anmeldetag: **24.09.80**

(51) Int. Cl.⁴: **C 08 F 20/12,** C 08 F 2/06, C 09 D 7/06

(54) Verwendung von Polymerisatlösungen von Acryl- und Methacrylsäureestern als Lackhilfsmittel.

(30) Priorität: **03.10.79 DE 2940042**

(43) Veröffentlichungstag der Anmeldung:
**15.04.81 Patentblatt 81/15**

(45) Bekanntmachung des Hinweises auf die Patenterteilung:
**10.09.86 Patentblatt 86/37**

(84) Benannte Vertragsstaaten:
**AT BE CH DE FR GB LI NL**

(56) Entgegenhaltungen:
**DE-A-2 703 311**
**DE-B-2 027 124**
**FR-A-2 322 899**
**US-A-4 075 242**

(73) Patentinhaber: **Henkel Kommanditgesellschaft auf Aktien**
**Postfach 1100 Henkelstrasse 67**
**D-4000 Düsseldorf-Holthausen (DE)**

(72) Erfinder: **Eschwey, Helmut, Dr.**
**Landrat-Ackermann-Strasse 28**
**D-6120 Michelstadt-Odenwald (DE)**
Erfinder: **Wegemund, Bernd, Dr.**
**Händelweg 3**
**D-5657 Haan/Rhld. (DE)**
Erfinder: **Gress, Wolfgang**
**Westfalenweg 247**
**D-5600 Wuppertal-Elberfeld (DE)**

Courier Press, Leamington Spa, England.

EP 0 026 875 B1

**0 026 875**

**Beschreibung**

Es ist bekannt, Polymerisate aus (Meth)acrylsäureestern von verschiedenen Alkoholen in Lösungsmitteln herzustellen. Hierbei kann man beispielsweise Kohlenwasserstoffe, wie Xylol oder Mineralöle, sowie Lösungsmittel mit funktionellen Gruppen wie Butanol, Cyclohexanon, Nitrobutan, Essigsäure und dergleichen verwenden. Diese Lösungen können beispielsweise als Hilfsmittel bei der Herstellung von Epoxidharz-, Polyurethan-, Chlorkautschuk-, PVC-, und Nitrocelluloselacken verwendet werden. Häufig auftretende Verlaufsstörungen und Oberflächenfelder, wie Kantenflucht, Apfelsinenschaleneffekt und Eierschaleneffekt oder Kraterbildung können so vermindert werden. Die Ergebnisse sind im allgemeinen zufriedenstellend, jedoch wird nicht in allen Fällen der gewünschte Effekt in ausreichendem Maß erreicht, insbesondere dann wenn man in Mineralölen oder Estern polymerisiert hat und die Polymerisate ohne Zwischenisolierung verwendet. Ausserdem sind Mineralöle und Fettsäureester als Begleitstoffe in Lackadditiven im Grunde unerwünscht, da sie nach der Trocknung der Lacke im Film verbleiben und häufig unverträglich sind. Durch Aufschwimmen, Bildung von Fischaugen und dergleichen können sie zu Verlaufsstörungen Anlaß geben. Werden die Poly(meth)acrylate in Mineralölen hergestellt, so fallen häufig hochviskose und unter Umständen teilweise Gelteilchen enthaltende Produkte an, die schwer zu handhaben sind und eine unerwünschte breite, undefinierte Molekulargewichtsverteilung aufweisen.

Es bestand daher die Aufgabe, solche Verlaufsmittel auf Basis von Polyacrylaten zu entwickeln, die aufgrund des Lösungsmittels keinen negativen Einfluß auf den fertigen Überzug haben. Eine weitere Aufgabe der vorliegenden Erfindung bestand darin, solche Lackhilfsmittel zu finden, in denen die polymerisierten Acrylate beziehungsweise Methacrylate auch in einer Konzentration oberhalb von 30%, insbesondere 40%, noch ohne weiteres handhabbar sind. Auch sollte bei einer gleichmäßigen Temperaturführung in technischem Maßstabe reproduzierbar polymerisiert werden können.

Die Lösung der gestellten Aufgabe besteht in der Verwendung von Polymerisatlösungen, hergestellt durch Polymerisation von (Meth)acrylsäureestern, die in der Alkoholkomponenten im Durchschnitt 1 bis 16, insbesondere 2 bis 10 Kohlenstoffatome enthalten, in oberhalb von 160°C siedenden Alkoholen mit 8 bis 40 Kohlenstoffatomen, inbesondere Guerbet-Alkoholen, wobei der gesamte Ansatz für die Polymerisation neben den hydroxylgruppenhaltigen Lösungsmitteln 15 bis 85%, insbesondere 30 bis 75%, bezogen auf den Gesamtansatz an polymerisierbaren (Meth)acrylsaüreestern enthält, als Lackhilfsmittel für Polyurethan- bzw. Epoxidharzlacke in einer Menge von 0,2 bis 5 Gewichtsprozent der Polymerisatlösung, bezogen auf den fertigen Lack.

Der Einsatz von relativ niedermolekularem, insbesondere flüssigem Poly-ethylacrylat zu pulverförmigen, heißhärtenden Epoxidharz-Zusammensetzung (Pulverlacken) ist aus der FR—A 23 22 899 bekannt. Derartige Polymere mit niedrigem Molekulargewicht müssen aber in verdünnten nur 1 bis 2 gewichtsprozentigen Lösungen hergestellt und aus diesen vor der Verwendung isoliert werden (vgl. Seite 4, Zeilen 19—29).

Es konnte nicht erwartet werden, daß die erfindungsgemäß einzusetzenden Gemische aus (Meth)acrylatpolymeren und hochsiedenden Alkoholen sowohl in Reaktionslacken auf Basis von Polyisocyanaten und Polyepoxidverbindungen die vorstehend geschilderten Schwierigkeiten würden beheben können. Nachweislich der Beispiele verläuft die Polymerisation in den Alkoholen weitgehend isotherm.

Als Lösungsmittel für die Polymerisation kommen demnach Alkohole in Frage wie beispielsweise n-Octanol oder auch die anderen isomeren Octanole. Weiterhin sind von praktischer Bedeutung Ethylhexylalkohol oder isomere Dimethyloctanole. Alle geeigneten Alkohole sollen einen Siedepunkt von oberhalb 180°C, vorzugsweise oberhalb von 200°C aufweisen. Eine Gruppe von günstig einzusetzenden Alkoholen sind die Sogenannten Fettalkohole mit etwa 12 bis 18 Kohlenstoffatomen. Außerdem sind geeignete Alkohole, die durch Guerbetisierung entstandenen Monoalkohole mit 12 bis 36 Kohlenstoffatomen. Geeignete Diole sind beispielsweise auch durch Hydrolyse aus aliphatischen Epoxidverbindungen erhältlich, wobei die Epoxidgruppe sowohl innenständig wie endständig sein kann. Geeignet sind demnach beispielsweise Dodecyldecandiol oder auch Octadecyldecandiol. Bei geeigneter Länge der Kohlenstoffkette können selbstverständlich auch mehr als 1 zu 6 OH-Gruppen in Molekül geeignet sein. Derartige mehr also 200H-gruppenhaltige Substanzen sind durch Hydrolyse aus aliphatischen Epoxiden, ausgehend von 2 bis 3 Epoxidgruppen im Molekül, erhältlich. Ferner stellt eine weitere Gruppe von geeigneten aliphatischen Hydroxylverbindungen, die durch Anlagerung von Kohlenmonoxid und anschließender Hydrierung aus ungesättigten und unter Umständen mehrfach ungesättigten Fettalkoholen erhältlich sind. Es handelt sich hier um primäre Alkanole wie etwa Bis(hydroxymethyl)-octadecanol oder Hydroxymethyloctadecanol. Weiterhin verwendbar sind die durch Hydrierung aus verzweigten Fettsäuren mit etwa 9 bis 18 Kohlenstoffatomen beziehungsweise deren Estern herstellbaren synthetischen Alkohole geeignet. Durch Kombination von Alkoholen der vorstehend genannten Art kann unter Umständen eine besonders günstige spezifische Polymerisation erhalten werden.

Die Polymerisation wird in bekannter Weise durch Radikalbildner ausgelöst. Abgesehen von dem Einwirken energiereicher Strahlung ist die Auslösung mit in Radikale zerfallenden Verbindungen wie Peroxiden, Hydroperoxiden oder Azoverbindungen üblich. In diesem Falle kommen beispielsweise in

2

Frage Benzoylperoxid, Azobisisobuttersäuredinitril oder aber Hydroperoxide, wie Cumolhydroperoxid, Butylhydroperoxid und dergleichen mehr. Zur Steuerung der Reaktion ist est auch möglich, übliche Regler zuzustetzen.

Neben den wesentlichen Acrylsäureestern beziehungsweise Methacrylsäureestern, die in der Alkoholkomponente 1 bis 16, insbesondere 2 bis 10 Kohlenstoffatome enthalten, wie etwa Methacrylsäureoctylester, Acrylsäureethylhexylester, Methacrylsäureethylester, Acrylsäureoctylester, Methacrylsäuredodecylester und dergleichen mehr, können auch weitere Commonomere bis zu einer Menge von etwa 5 bis 15% an der Polymerisation teilnehmen. Es handelt sich hier bei diesem zur Modifizierung geeigneten Monomeren in der Regel auch um Acrylsaureverbindungen, beispielsweise Acrylamid oder am Stickstoff substituiertes Acrylamid, wie N-Methylmethacrylamid, n-Butylacrylamid oder auch Acrylnitril, Vinylidenchlorid, Styrol, Methylstyrol oder auch um Butadien oder Methylbutadien.

Die so hergestellten Mischpolymerisat-Alkohol-Gemische werden direkt als Lackhilfsmittel eingesetzt, sie bewirken eine überraschend gute Verbesserung der Verlaufseigenschaft des damit versetzten Lacks und eignen sich Konzentrationen von 0,2 bis 5%, bezogen auf das gesamte Lacksystem. Sie sind einsetzbar beispielsweise in Reaktivsystemen aus zwei Komponenten wie Polyurethanlacken oder Epoxidlacken.

Herstellung der Mischpolymerisate

In einer 10—1—V4A—Stahlapparatur mit Ankerrührer und Außenkühlung (Kühlwasser 15°C) werden 20 kg Lösungsmittel vorgelegt, unter Stickstoff-Atomsphäre auf 90°C aufgeheizt und unter Rühren eine Mischung aus 55,6 kg Ethylhexylacrylat, 4,4 kg Ethylacrylat, 20 kg Lösungsmittel und 0,2 kg Benzoylperoxid innerhalb 2,5 Stunden zugetropft. Bei Temperaturanstieg >92°C wird gekühlt.

In der Tabelle sind verschiedene Lösungsmittel und der entsprechende Polymerisationsverlauf dargestellt.

## TABELLE

| Ansatz | Lösungsmittel | Temperatur-intervall |
|--------|---------------|----------------------|
| 1 | Guebertalkohol C 16 | 80—82 |
| 2 | Guebertalkohol C 20 | 80—85 |
| 3 | Guebertalkohol C 16/12 | 80—83 |
| 4 | Guebertalkohol C 12 | 80—83 |
| 5 | Guebertalkohol C 8/10 | 80—82 |
| 6 | Fettalkohol C 8/10 | 80—83 |
| 7 | Bis(hydroxymethyl)octadecanol ($C_{20}$) | 80 (konst.) |
| 8 | Hydroxymethyloctadecanol ($C_{19}$) | 80 (konst.) |

## Beispiel 1

(Lösemittelfreier Epoxylack)
Mahlansatz (500 g Komponente 1)
    300,0 g Epoxidharz Epoxidwert 0,52)
     12,0 g hydriertes Ricinusöl
     63,0 g Bariumsulfat
     40,0 g Titandioxid
     75,0 g Talkum
     10,0 g Eisenoxidgelb

Mahlansatz (300 g Komponente 2)
    300,0 g handelsübliches Imidazolingruppen enthaltendes Polyaminoamid aus dimerisierten Fettsäuren und techn. Polyaminen (Aminzahl 190)
     40,0 g Titandioxid
     30,0 g Chromgelb
    130,0 g Bariumsulfat

Die Mahlansätze wurden auf einem Dreiwalzenstuhl abgerieben. Das erfindungsgemäße Produkt wurde der Komponente 1 hinzugefügt. (Ebenso besteht die Möglichkeit, das Produkt den vereinigten Mahlansätzen zuzugeben.)

3

Beispiel 2

(Polyurethanlack)

Mahlansatz (600 g Komponente 1)

400,0 g verzweigter hydroxylgruppenhaltiger Polyester (OH-Gehalt = circa 6 Gew.-%), 50 %ig in Verdünnung*

100,0 g Titandioxid

100,0 g Chromoxidgrün

Der Mahlansatz wurde auf einem Driewalzenstuhl abgerieben.

Die Auflacklösung (160 g) bestand aus

159,0 g Verdünnung*

1,0 g Zinkoctoat (8 % Zn)

Die Komponente 2 bestand aus

240,0 g eines polyfunktionellen, aliphatischen Isocyanats, 75 %ig in Ethylenglykolmonoethyletheracetat/Xylol 1:1 (NCO-Gehalt 16,5 Gew.-%)

Die Verdünnung* hatte folgende Zusammensetzung: 30,0 g Methylethylketon, 10,0 g Butylacetat, 30,0 g Ethylenglykolmonoethyletheracetat, 10,0 g Toluol.

Das erfindungsgemäße Produkt wurde der Lacklösung mitt der Auflacklösung zugegeben (In anderen Herstellungsphasen ist dies aber auch möglich.)

Herstellung der Überzüge

Die Überzüge wurden so hergestellt, daß mit einer 60 mm breiten Rakel bei einem Abstand von 100µ der lösungsmittelfreie Epoxidharzlack A auf doppelt dekapierte Tiefziehbleche (70 × 300 × 100 mm) sowie auf entsprechend große Glasplatten appliziert wurde. Bei dem lösungsmittelhaltigen Polyurethanlack betrug der Abstand 200µ. Nach achttägiger Lagerung unter Normalbedingungen wurden die folgenden Prüfungen durchgeführt:

1. Glanz (20° Reflektometerwert nach DIN 67530)

2. Pendelhärte (DIN 53517)

3. Verlauf (visuelle Beurteilung)

Bei dem lösungsmittelfreien Epoxidharz nach Beispiel 1 wurde bei der visuellen Beurteilung in allen Fällen ein guter Verlauf beobachtet. Die Pendelhärte war zufriedenstellend und lag bei Werten zwischen 183 bis 186. Der Glanz lag bei Werten zwischen 90 und 95. In allen Fällen erfolgte eine Zugabe von 0,5 Gew.-% Polymerisatlösung, bezogen auf die gesamte Lackmischung.

Vergleichsversuch mit Epoxidharzüberzug

Ohne den Zusatz eines Verlaufsmittels wurde starke Apfelsinenschalenstruktur beobachtet. Der Glanz betrug nur 69%. Wurde statt dessen eine Polymerisat gemäß Vergleich a) und b) nach Tabelle 2 in einer Menge von 0,5 Gew.-% zugesetzt, wurde ebenfalls starke Apfelsinenstruktur beobachtet. Wenn statt dessen 0,5 Gew.-% des Esters von Fettsäure mit Trimethylolpropan (Vergleich c) Tabelle 2) verwendet wurde, war die Apfelsinenschalenstruktur mäßiger, aber deutlich ausgeprägt. Teilweise wurden hier sogenannte Fischaugen beobachtet.

Bei lösungsmittelhaltigen Polyurethanüberzügen nach Beispiel 2 wurde bei einem Zusatz von 0,2% Hilfsmittel nach acht Tagen ein glatter Verlauf beobachtet. Nur an vereinzelten Stellen konnte eine geringe Apfelsinenschalenstruktur festgestellt werden. Die Pendelhärte bewegte sich zwischen 200 und 225. Der Glanz lag zwischen 82 und 93%.

Zum *Vergleich* wurde ein Überzug ohne jeden weiteren Zusatz hergestellt. Hier wurde starke Kraterbildung beobachtet. In drei weiteren Vergleichsversuchen wurde 0,2 Gew.-% der Substanzen nach a) und b), Tabelle eingesetzt. In diesem Falle wurde eine deutlicher Apfelsinenschaleneffekt beobachtet. Wurde statt dessen 0,2 Gew.-% des Fettsäureesters von Trimethylolpropan eingesetzt, so wurde Kraterbildung mit Fischaugen festgestellt.

**Patentanspruch**

Verwendung von Polymerisatlösung, hergestellt durch Polymerisation von (Meth)acrylsäureestern, die in der Alkoholkomponente im Durchschnitt 1 bis 16, insbesondere 2 bis 10 Kohlenstoffatome enthalten, in oberhalb von 160°C siedenden Alkoholen mit 8 bis 40 Kohlenstoffatomen, insbesondere Guerbet-Alkoholen, wobei der gesamte Ansatz für die Polymerisation neben den hydroxylgruppenhaltigen Lösungsmitteln 15 bis 85%, insbesondere 30 bis 75%, bezogen auf den Gesamtansatz an polymerisierbaren (Meth)acrylsäureestern enthält, als Lackhilfsmittel für Polyurethan- bzw. Epoxidharzlacke in einer Menge von 0,2 bis 5 Gewichtsprozent der Polymerisatlösung, bezogen auf den fertigen Lack.

**Revendication**

Utilisation de solutions de polymérisats, fabriquées par polymérisation d'esters de l'acide (méth) acrylique, qui contiennent, dans les composants alcools, en moyenne 1 à 16, en particulier 2 à 10 atomes de carbone, dans des alcools à 8 à 40 atomes de carbone, en particulier des alcools de Guerbet, bouillant au-dessus de 160°C, l'ensemble de la charge destinée à la polymérisation contenant, à côté de solvants contenant des groupes hydroxyles 15 à 85%, en particulier 30 à 75%, calculé sur la charge totale d'esters de l'acide (méth) acrylique polymérisable, comme agents auxiliaries pour vernis, pour les vernis de polyuréthane ou de résines époxy, dans la proportion de 0,2 à 5% en poids de la solution de polymérisat, calculé sur le vernis terminé.

**Claim**

The use of polymer solutions prepared by polymerization of (meth) acrylates, which contain on average from 1 to 16 and more especially from 2 to 10 carbon atoms in the alcohol component, in $C_8$—$C_{40}$ alcohols boiling at temperatures above 160°C, more especially Guerbet alcohols, the polymerization mixture as a whole containing — in addition to the hydroxyl-containing solvents — from 15 to 85° and more especially from 30 to 75%, based on the mixture as a whole, of polymerizable (meth)acrylates, as lacquer auxiliaries for polyurethane or epoxy resin lacquers in a quantity of from 0.2 to 5% by weight of the polymer solution, based on the final lacquer.